# FASCICULE DE BREVET EUROPEEN

(11) **EP 3 784 915 B1**
(45) Date de publication et mention de la délivrance du brevet: **04.05.2022**
(21) Numéro de dépôt: 19720544.6
(22) Date de dépôt: 26.04.2019
(51) Int. Cl.: F16C 35/063, F16C 41/00, F16C 19/06

(54) **PALIER À ROULEMENT**
WÄLZLAGER
ROLLING BEARING

(30) Priorité: 26.04.2018 FR 1853695
(43) Date de publication de la demande: 03.03.2021
(73) Titulaire: NTN-SNR ROULEMENTS, 74000 Annecy (FR)
(72) Inventeur: CHARVET-QUEMIN, Jean-François, 74230 Dingy Saint Clair (FR); POURROY-SOLARI, Vincent, 74230 Thones (FR); REDOUTEY, Louis, 73410 Entrelacs (FR)
(74) Mandataire: Sayettat, Julien Christian
(86) Numéro de dépôt international: PCT/EP2019/060726
(87) Numéro de publication internationale: WO 2019/207103

(56) Documents cités:
- EP-A1- 0 521 789
- WO-A1-2010/116208
- FR-A1- 2 826 413
- JP-A- 2000 018 241
- US-A- 5 622 437

## Description

L'invention concerne un palier à roulement comprenant un organe intérieur, un organe extérieur et des corps roulants disposés dans un espace de roulement formé entre lesdits organes pour permettre la rotation relative de l'organe intérieur par rapport à l'organe extérieur.

Elle s'applique en particulier à un palier à roulement pour le montage en rotation du rotor d'un moteur électrique, l'organe intérieur étant solidaire en rotation dudit rotor et l'organe extérieur étant fixé à une structure.

On connaît des paliers à roulement dans lesquels l'organe intérieur tournant comprend une bague présentant une piste de roulement et une paroi intérieure qui est associée, notamment par emmanchement, autour d'une portée extérieure d'un moyeu dudit organe intérieur, ledit moyeu pouvant notamment faire partie d'un rotor ou être sous la forme d'un manchon d'association à un tel rotor.

Pour fiabiliser l'association de la bague sur le moyeu, il est connu de prévoir une gorge sur la portée extérieure dudit moyeu, dans laquelle un anneau est disposé en présentant un segment intérieur immobilisé axialement dans ladite gorge et un segment extérieur en saillie de ladite gorge pour former une butée axiale de ladite association.

Notamment dans ce type de montage, on peut souhaiter connaître en temps réel et avec une fiabilité optimale au moins une information relative à la rotation de l'organe tournant, par exemple un paramètre de rotation tel que sa position, sa vitesse, son accélération ou son sens de rotation.

Pour ce faire, on connaît des dispositifs comprenant un codeur présentant une piste codeuse qui est apte à générer un signal représentatif de sa rotation, ainsi qu'un capteur apte à déterminer une telle information par détection du signal généré. Ainsi, en équipant l'organe intérieur tournant avec le codeur et en fixant le capteur à distance de lecture du signal généré par ledit codeur, on peut déterminer au moins une information relative à la rotation dudit organe.

De façon avantageuse, le codeur comprend une armature de solidarisation dont une section est associée en rotation sur une paroi de l'organe tournant, ladite section d'association étant entourée par une paroi périphérique sur laquelle la piste codeuse est disposée. Un tel dispositif est connu de FR 2 826 413 A1, qui montre les caractéristiques du préambule de la revendication 1.

Toutefois, se pose alors le problème de la tenue mécanique de l'armature sur l'organe lors de sa rotation, et ce plus particulièrement lorsque la vitesse de rotation est élevée comme c'est le cas dans les moteurs électriques.

En effet, de possibles déplacements et/ou déformations de l'armature induisent des variations de positionnement de la piste codeuse par rapport au capteur, ce qui nuit à la fiabilité de la détection du signal.

L'invention a pour but de perfectionner l'art antérieur en proposant notamment un palier à roulement dans lequel un codeur est solidarisé à l'organe intérieur tournant de façon particulièrement fiable, et ce même en cas de vitesse de rotation élevée dudit organe tournant.

A cet effet, l'invention propose un palier à roulement comprenant un organe extérieur et un organe intérieur délimitant entre eux un espace de roulement dans lequel des corps roulants sont disposés pour permettre la rotation relative dudit organe intérieur par rapport audit organe extérieur, ledit organe intérieur comprenant une bague présentant une piste de roulement et une paroi intérieure qui est associée autour d'une portée extérieure d'un moyeu dudit organe intérieur, ladite portée comprenant une gorge dans laquelle un anneau est disposé en présentant un segment intérieur immobilisé axialement dans ladite gorge et un segment extérieur en saillie de ladite gorge pour former une butée axiale de l'association de la bague sur le moyeu, l'organe intérieur étant équipé d'un codeur présentant une piste codeuse qui est apte à générer un signal représentatif de sa rotation, ledit codeur comprenant une armature de solidarisation en rotation audit organe intérieur, l'armature de solidarisation présentant une section d'arrêt qui est interposée entre la bague intérieure et le segment extérieur de l'anneau, ladite bague intérieure étant en butée axiale sur ledit segment extérieur par l'intermédiaire de ladite section d'arrêt.

D'autres objets et avantages de l'invention apparaîtront dans la description qui suit, faite en référence aux figures annexées, dans lesquelles :
- la figure 1 est une vue partielle en coupe longitudinale d'un palier à roulement selon un mode de réalisation de l'invention, la figure 1a étant une vue agrandie de la figure 1 ;
- la figure 2 est une vue agrandie analogue à la figure 1a montrant une variante de réalisation suivant l'invention ;
- la figure 3 est une vue partielle en coupe longitudinale d'un palier à roulement selon un autre mode de réalisation de l'invention, la figure 3a étant une vue agrandie de la figure 3 ;
- la figure 4 est une vue en perspective de l'armature des figures 3 et 3a, la figure 4a étant une vue agrandie de la figure 4.

En relation avec ces figures, on décrit ci-dessous un palier à roulement, en particulier pour le montage en rotation du rotor d'un moteur électrique.

Le palier comprend un organe intérieur 1 et un organe extérieur 2 délimitant entre eux un espace de roulement dans lequel des corps roulants 3 sont disposés pour permettre la rotation relative dudit organe intérieur par rapport audit organe extérieur autour d'un axe.

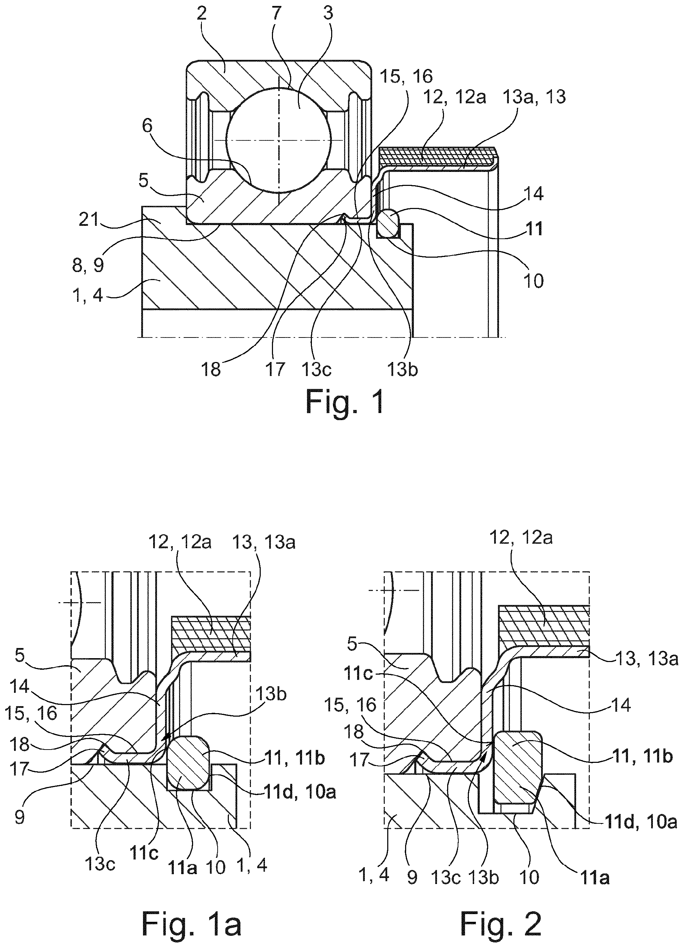

Dans cette description, les termes de positionnement dans l'espace sont pris en référence à l'axe de rotation du palier (horizontal sur les figures 1 à 3a). En particulier, le terme « intérieur » est relatif à une disposition proche de cet axe et le terme « extérieur » est relatif à une disposition à distance de cet axe.

Dans l'application considérée, l'organe intérieur 1 tournant comprend un moyeu 4, par exemple faisant partie du rotor d'un moteur électrique, ou sous la forme d'un manchon d'association à un tel rotor, l'organe extérieur 2 étant fixé à une structure.

L'organe intérieur 1 comprend une bague intérieure 5 présentant une piste de roulement extérieure 6. De même, l'organe extérieur 2 comprend une bague extérieure qui est montée autour de la bague intérieure 5 en présentant une piste de roulement intérieure 7 qui est disposée en regard radial de la piste de roulement extérieure 6, les pistes 6, 7 formant entre elles un chemin de roulement pour une rangée de corps roulants 3 sous forme de billes.

Toutefois, l'invention n'est pas limitée à un mode de réalisation particulier de la géométrie du palier, en particulier relativement aux géométries des corps roulants 3 et/ou des organes 1, 2.

La bague intérieure 5 présente une paroi intérieure 8 qui est associée autour d'une portée extérieure 9 du moyeu 4. En particulier, le moyeu 4 présente un bord avant 21 s'étendant radialement depuis une extrémité avant de la portée extérieure 9, la bague intérieure 5 étant associée par emmanchement sur ladite portée en venant en appui axial sur ledit bord.

Dans la description, les termes « avant » et « arrière » sont relatifs à une disposition par rapport au sens d'emmanchement de la bague intérieure 5 sur le moyeu 4, à savoir respectivement à gauche et à droite sur les figures 1 à 3a.

Pour fiabiliser l'association de la bague 5 sur le moyeu 4, la portée extérieure 9 comprend une gorge arrière 10 dans laquelle un anneau 11 est disposé en présentant un segment intérieur 11a immobilisé axialement dans ladite gorge et un segment extérieur 11b en saillie de ladite gorge pour former une butée axiale arrière de l'association de ladite bague sur ledit moyeu. Ainsi la bague intérieure 5 est immobilisée axialement entre le bord avant 21 et l'anneau 11.

De façon avantageuse, l'anneau 11 est un anneau élastique dont le diamètre peut varier de manière réversible pour permettre son montage dans la gorge 10.

Selon une réalisation, l'anneau 11 présente une géométrie annulaire fendue, par exemple de type "Circlip".

Pour connaître en temps réel et avec une fiabilité optimale au moins une information relative à la rotation de l'organe tournant 1, par exemple un paramètre de rotation tel que sa position, sa vitesse, son accélération ou son sens de rotation, ledit organe intérieur est équipé d'un codeur 12 présentant une piste codeuse 12a qui est apte à générer un signal représentatif de sa rotation.

Le codeur 12 comprend une armature 13 de solidarisation en rotation à l'organe intérieur 1, ladite armature présentant une section extérieure 13a sur laquelle la piste codeuse 12a est disposée. De façon avantageuse, l'armature 13 est réalisée en tôle métallique emboutie pour la conformer selon la géométrie annulaire souhaitée.

En particulier, la section extérieure 13a présente une face extérieure qui est recouverte d'un matériau apte à générer le signal. Selon une réalisation, la piste codeuse 12a est magnétique, notamment multipolaire en présentant une succession alternée de paires de pôles Nord et Sud qui s'étend selon la direction de rotation du codeur 12. Ainsi, la piste codeuse 12a est apte à émettre un signal magnétique périodique représentatif du déplacement du codeur 12, notamment un signal de forme pseudo-sinusoïdal. Selon une réalisation avantageuse, le codeur 12 peut présenter deux ou trois pistes codeuses 12a, par exemple disposées concentriquement, pour pouvoir déterminer l'information de rotation souhaitée.

En particulier, un aimant peut être associé sur la section extérieure 13a, ledit aimant pouvant être formé d'une matrice annulaire, par exemple réalisée à base d'un matériau plastique ou élastomère, dans laquelle sont dispersées des particules magnétiques, notamment des particules de ferrite ou de terres rares comme le NdFeB, ladite matrice étant surmoulée sur la section extérieure 13a.

Le palier à roulement comprend en outre un capteur (non représenté) apte à détecter le signal généré par la/les piste/s codeuse/s 12a, ledit capteur étant disposé à distance de lecture de ladite/lesdites piste/s, ledit capteur comprenant en outre des moyens de traitement dudit signal pour déterminer l'information de rotation souhaitée.

L'armature 13 présente une section d'arrêt 13b qui est interposée entre la bague intérieure 5 et le segment extérieur 11b de l'anneau 11, ladite bague intérieure étant en butée axiale sur ledit segment extérieur par l'intermédiaire de ladite section d'arrêt.

Ainsi, l'anneau d'arrêt 11, en plus de fiabiliser l'association de la bague 5 au moyeu 4, fiabiliser la solidarisation en rotation du codeur 12 sur l'organe intérieur 1, et ce même lors d'une rotation à vitesse élevée dudit organe intérieur.

En particulier, l'anneau d'arrêt 11 permet de limiter les risques de déplacements et/ou de déformations de l'armature 13 afin, en limitant les risques de variations du positionnement de la piste codeuse 12a par rapport au moyeu 4, de garantir la fiabilité de l'information lue par le capteur.

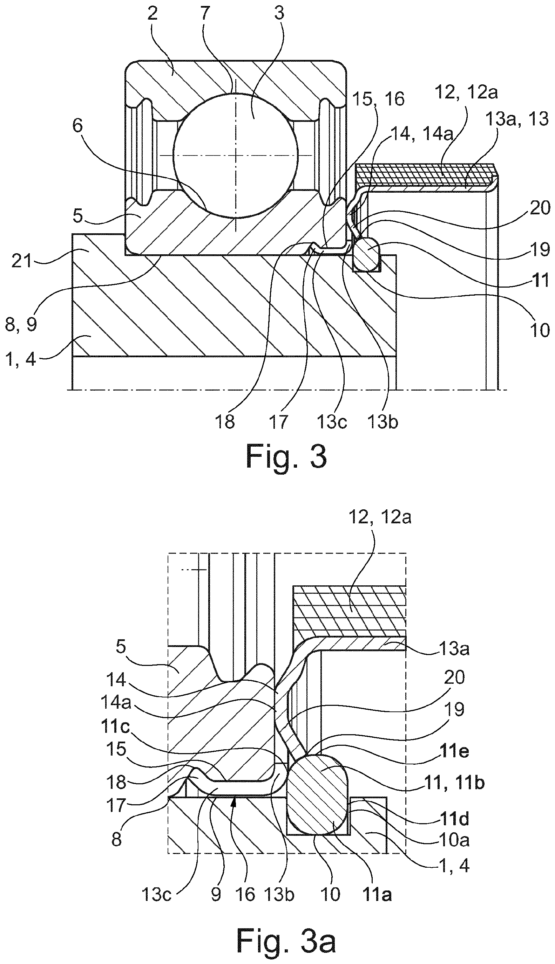

L'anneau 11 présente une face avant 11c sur laquelle la section d'arrêt 13b est en appui axial, et une face arrière 11d en appui sur une face complémentaire 10a de la gorge 10. En relation avec les figures 1 et 3, la face arrière 11d et la face complémentaire 10a s'étendent radialement.

De façon avantageuse, la face arrière 11d et/ou la face complémentaire 10a peuvent présenter un profil tronconique qui est agencé pour qu'un serrage radial de l'anneau 11 dans la gorge 10 induise un effort axial de plaquage de la face avant 11c sur la section d'arrêt 13b. En particulier, la figure 2 représente une variante dans laquelle la face arrière 11d et la face complémentaire 10a présentent toutes deux un tel profil tronconique.

Dans les modes de réalisation représentés, la section d'arrêt 13b s'étend radialement entre une face de la bague 5 et le segment extérieur 11b. En particulier, l'armature 13 présente une paroi radiale 14 sur laquelle la section d'arrêt 13b est formée. Par ailleurs, la section extérieure 13a s'étend sensiblement axialement à l'extérieur de la section d'arrêt 13b.

Pour fiabiliser davantage la solidarisation du codeur 12 à l'organe tournant 1, l'armature 13 présente une section 13c d'association à la bague intérieure 5. Sur les figures, la section d'association 13c s'étend sensiblement axialement à l'intérieur de la section d'arrêt 13b.

La section d'association 13c peut notamment être fixée à une paroi intérieure 15 de la bague 5. Dans les modes de réalisation représentés, la paroi intérieure 15 est disposée en regard de la portée 9 du moyeu 4, la section d'association 13c étant immobilisée radialement entre la paroi 15 et ladite portée. En particulier, la bague 5 présente un embrèvement 16 dans lequel la paroi intérieure 15 s'étend en formant un logement pour la section d'association 13c.

De façon avantageuse, la section d'association 13c présente un moyen de retenue axiale de l'armature 13 sur la bague 5, afin de renforcer la tenue du codeur 12 sur l'organe tournant 1.

Pour ce faire, en relation avec les figures 1 à 3a, la section d'association 13c présente un repli radial 17 formant un tel moyen de retenue axiale. Par ailleurs, la paroi intérieure 15 présente une rainure 18 formée à l'avant du logement, dans laquelle le repli radial 17 est disposé en butée axiale.

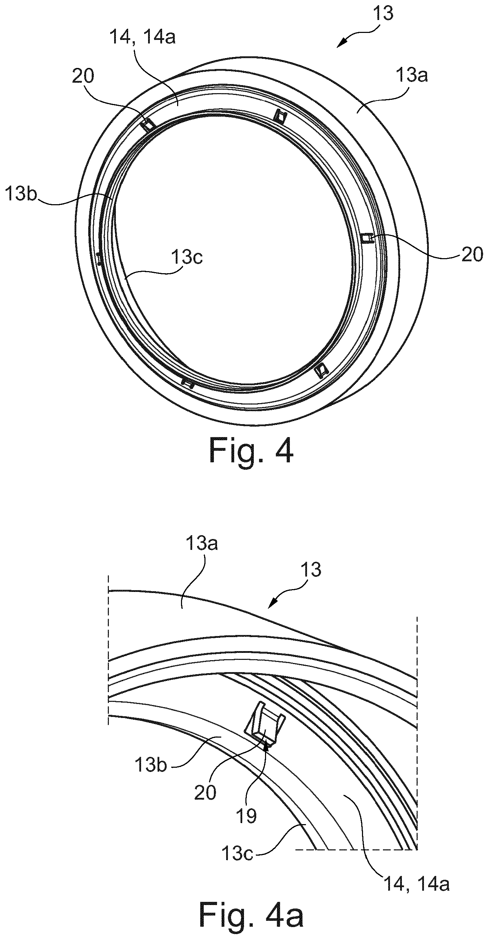

En relation avec les figures 3 à 4, l'armature de solidarisation 13 présente au moins une saillie 19 qui est disposée autour de l'anneau 11 pour empêcher un déplacement radial dudit anneau dans la gorge 10.

Ainsi, on améliore le maintien de l'anneau 11 dans la gorge 10, ce qui permet de fiabiliser la solidarisation de la bague 5 audit moyeu, et ce même en cas de rotation à vitesse élevée.

Sur les figures 3 et 3a, la saillie 19 est disposée en interférence sur une paroi extérieure 11e de l'anneau 11, afin de maintenir ledit anneau dans la gorge 10 par interférence radial de ladite saillie sur ladite paroi extérieure. Selon une réalisation, la paroi extérieure 11e est en appui radial sur la saillie 19, par exemple en prévoyant que le diamètre inscrit de ladite saillie soit inférieur au diamètre extérieur de ladite paroi lorsque l'anneau est en position stable.

En particulier, la saillie 19 est formée sur la paroi radiale 14 comprenant la section d'arrêt 13b, notamment à l'extérieur de ladite section d'arrêt. Dans le mode de réalisation représenté, la paroi radiale 14 présente une couronne 14a formée à l'extérieur de la section d'arrêt 13b et s'étendant radialement autour de l'anneau 11, ladite couronne présentant au moins une patte 20 dont l'extrémité libre est disposée axialement en saillie autour de l'anneau 11, afin de venir en interférence radiale avec la paroi extérieure 11e.

De façon avantageuse, la patte 20 est formée par une découpe de la couronne 14a, afin de faciliter la fabrication de l'armature 13.

En outre, l'armature 13 présente plusieurs saillies 19 qui sont réparties angulairement sur la couronne 14a, notamment avec un pas angulaire constant, afin d'assurer un maintien régulier de l'anneau 11 sur sa circonférence.

## Revendications

1. Palier à roulement comprenant un organe extérieur (2) et un organe intérieur (1) délimitant entre eux un espace de roulement dans lequel des corps roulants (3) sont disposés pour permettre la rotation relative dudit organe intérieur par rapport audit organe extérieur, ledit organe intérieur comprenant une bague (5) présentant une piste de roulement (6) et une paroi intérieure (8) qui est associée autour d'une portée extérieure (9) d'un moyeu (4) dudit organe intérieur, ladite portée comprenant une gorge (10) dans laquelle un anneau (11) est disposé en présentant un segment intérieur (11a) immobilisé axialement dans ladite gorge et un segment extérieur (11b) en saillie de ladite gorge pour former une butée axiale de l'association de la bague (5) sur le moyeu (4), l'organe intérieur (1) étant équipé d'un codeur (12) présentant une piste codeuse (12a) qui est apte à générer un signal représentatif de sa rotation, ledit codeur comprenant une armature (13) de solidarisation en rotation audit organe intérieur, ledit palier étant **caractérisé en ce que** l'armature (13) de solidarisation présente une section d'arrêt (13b) qui est interposée entre la bague intérieure (5) et le segment extérieur (11b) de l'anneau (11), ladite bague intérieure étant en butée axiale sur ledit segment extérieur par l'intermédiaire de ladite section d'arrêt.

2. Palier à roulement selon la revendication 1, **caractérisé en ce que** la section d'arrêt (13b) s'étend radialement entre une face de la bague (5) et le segment extérieur (11b).

3. Palier à roulement selon l'une des revendications 1 ou 2, **caractérisé en ce que** l'armature de solidarisation (13) présente une section extérieure (13a) sur laquelle la piste codeuse (12a) est disposée.

4. Palier à roulement selon l'une quelconque des revendications 1 à 3, **caractérisé en ce que** l'armature de solidarisation (13) présente une section (13c) d'association de ladite armature à la bague intérieure (5).

5. Palier à roulement selon la revendication 4, **caractérisé en ce que** la section d'association (13c) s'étend sensiblement axialement à l'intérieur de la section d'arrêt (13b).

6. Palier à roulement selon l'une des revendications 4 ou 5, **caractérisé en ce que** la section d'association (13c) est fixée à une paroi intérieure (15) de la bague (5).

7. Palier à roulement selon la revendication 6, **caractérisé en ce que** la paroi intérieure (15) est disposée en regard de la portée (9) du moyeu (4), la section d'association (13c) étant immobilisée radialement entre ladite paroi et ladite portée.

8. Palier à roulement selon la revendication 7, **caractérisé en ce que** la bague (5) présente un embrèvement (16) dans lequel la paroi intérieure (15) s'étend en formant un logement pour la section d'association (13c).

9. Palier à roulement selon l'une quelconque des revendications 4 à 8, **caractérisé en ce que** la section d'association (13c) présente un moyen (17) de retenue axiale de l'armature (13) sur la bague (5).

10. Palier à roulement selon la revendication 9, **caractérisé en ce que** la section d'association (13c) présente un repli radial (17) formant moyen de retenue axiale de l'armature (13) sur la bague (5).

11. Palier à roulement selon la revendication 10 lorsqu'elle dépend de la revendication 6, **caractérisé en ce que** le repli radial (17) est disposé en butée axiale dans une rainure (18) de la paroi intérieure (15) de la bague (5).

12. Palier à roulement selon l'une quelconque des revendications 1 à 11, **caractérisé en ce que** l'anneau (11) présente une face avant (11c) sur lequel la section d'arrêt (13b) est en appui axial, et une face arrière (11d) en appui sur une face complémentaire (10a) de la gorge (10).

13. Palier à roulement selon la revendication 12, **caractérisé en ce que** la face arrière (11d) et/ou la face complémentaire (10a) présentent un profil tronconique qui est agencé pour qu'un serrage radial de l'anneau (11) dans la gorge (10) induise un effort axial de plaquage de la face avant (11c) sur la section d'arrêt (13b).

14. Palier à roulement selon l'une quelconque des revendications 1 à 13, **caractérisé en ce que** l'armature de solidarisation (13) présente au moins une saillie (19) qui est disposée autour de l'anneau (11) pour empêcher un déplacement radial dudit anneau dans la gorge (10).

15. Palier à roulement selon la revendication 14, **caractérisé en ce que** l'armature de solidarisation (13) présente une paroi radiale (14) sur laquelle la section d'arrêt (13b) est formée, la saillie (19) étant formée sur ladite paroi à l'extérieur de ladite section d'arrêt.

## Patentansprüche

1. Wälzlager, umfassend ein äußeres Organ (2) und ein inneres Organ (1), die zwischen sich einen Wälzraum begrenzen, in dem Wälzkörper (3) angeordnet sind, um die relative Rotation des inneren Organs im Verhältnis zum äußeren Organ zu gestatten, wobei das innere Organ einen Kragen (5) umfasst, der eine Rollbahn (6) und eine Innenwand (8) aufweist, die um einen äußeren Sitz (9) einer Nabe (4) des inneren Organs verbunden ist, wobei der Sitz eine Nut (10) umfasst, in der ein Ring (11) angeordnet ist und ein inneres Segment (11a) aufweist, das in der Nut axial arretiert ist, und ein äußeres Segment (11b), das aus der Nut hervorsteht, um einen axialen Anschlag für die Verbindung des Kragens (5) auf der Nabe (4) zu bilden, wobei das innere Organ (1) mit einem Codierer (12) ausgestattet ist, der eine Codierbahn (12a) aufweist, die imstande ist, ein für seine Rotation repräsentatives Signal zu erzeugen, wobei der Codierer eine Armierung (13) zur festen rotatorischen Verbindung am inneren Organ umfasst, wobei das Lager **dadurch gekennzeichnet ist, dass** die Armierung (13) zur festen Verbindung einen Arretierungsabschnitt (13b) aufweist, der zwischen dem inneren Kragen (5) und dem äußeren Segment (11b) des Rings (11) angeordnet ist, wobei der innere Kragen vermittels des Arretierungsabschnitts in axialem Anschlag auf dem äußeren Segment ist.

2. Wälzlager nach Anspruch 1, **dadurch gekennzeichnet, dass** sich der Arretierungsabschnitt (13b) radial zwischen einer Fläche des Kragens (5) und dem äußeren Segment (11b) erstreckt.

3. Wälzlager nach einem der Ansprüche 1 oder 2, **dadurch gekennzeichnet, dass** die Armierung zur festen Verbindung (13) einen äußeren Abschnitt (13a) aufweist, auf dem die Codierbahn (12a) angeordnet ist.

4. Wälzlager nach einem der Ansprüche 1 bis 3, **dadurch gekennzeichnet, dass** die Armierung zur festen Verbindung (13) einen Verbindungsabschnitt (13c) der Armierung mit dem inneren Kragen (5) aufweist.

5. Wälzlager nach Anspruch 4, **dadurch gekennzeichnet, dass** sich der Verbindungsabschnitt (13c) etwa axial im Inneren des Arretierungsabschnitts (13b) erstreckt.

6. Wälzlager nach einem der Ansprüche 4 oder 5, **dadurch gekennzeichnet, dass** der Verbindungsabschnitt (13c) an einer Innenwand (15) des Kragens (5) befestigt ist.

7. Wälzlager nach Anspruch 6, **dadurch gekennzeichnet, dass** die Innenwand (15) dem Sitz (9) der Nabe (4) zugewandt angeordnet ist, wobei der Verbindungsabschnitt (13c) zwischen der Wand und dem Sitz radial arretiert ist.

8. Wälzlager nach Anspruch 7, **dadurch gekennzeichnet, dass** der Kragen (5) eine Vertiefung (16) aufweist, in der sich die Innenwand (15) erstreckt, indem sie eine Aufnahme für den Verbindungsabschnitt (13c) bildet.

9. Wälzlager nach einem der Ansprüche 4 bis 8, **dadurch gekennzeichnet, dass** der Verbindungsabschnitt (13c) ein axiales Rückhaltemittel (17) der Armierung (13) auf dem Kragen (5) aufweist.

10. Wälzlager nach Anspruch 9, **dadurch gekennzeichnet, dass** der Verbindungsabschnitt (13c) eine radiale Falte (17) aufweist, die ein axiales Rückhaltemittel der Armierung (13) auf dem Kragen (5) bildet.

11. Wälzlager nach Anspruch 10, wenn er von Anspruch 6 abhängt, **dadurch gekennzeichnet, dass** die radiale Falte (17) am axialen Anschlag in einer Rille (18) der Innenwand (15) des Rings (5) angeordnet ist.

12. Wälzlager nach einem der Ansprüche 1 bis 11, **dadurch gekennzeichnet, dass** der Ring (11) eine vordere Fläche (11c), auf der sich der Arretierungsabschnitt (13b) axial abstützt, und eine hintere Fläche (11d) in Abstützung auf einer komplementären Fläche (10a) der Nut (10) aufweist.

13. Wälzlager nach Anspruch 12, **dadurch gekennzeichnet, dass** die hintere Fläche (11d) und/oder die komplementäre Fläche (10a) ein kegelstumpfförmiges Profil aufweisen, das eingerichtet ist, damit ein radiales Spannen des Rings (11) in die Nut (10) eine axiale Andrückkraft der vorderen Fläche (11c) auf den Arretierungsabschnitt (13b) erzeugt.

14. Wälzlager nach einem der Ansprüche 1 bis 13, **dadurch gekennzeichnet, dass** die Armierung zur festen Verbindung (13) mindestens einen Vorsprung (19) aufweist, der um den Ring (11) angeordnet ist, um eine radiale Verlagerung des Rings in der Nut (10) zu verhindern.

15. Wälzlager nach Anspruch 14, **dadurch gekennzeichnet, dass** die Armierung zur festen Verbindung (13) eine radiale Wand (14) aufweist, auf der der Arretierungsabschnitt (13b) gebildet ist, wobei der Vorsprung (19) auf der Wand außerhalb des Arretierungsabschnitts ausgebildet ist.

## Claims

1. Rolling bearing comprising an exterior member (2) and an interior member (1) delimiting between them a rolling space in which rolling bodies (3) are disposed so as to allow the relative rotation of said interior member with respect to said exterior member, said interior member comprising a ring (5) having a raceway (6) and an interior wall (8) which is associated around an exterior bearing surface (9) of a hub (4) of said interior member, said bearing surface comprising a groove (10) in which an annular member (11) is arranged by having an interior segment (11a) axially immobilised in said groove and an exterior segment (11b) that projects from said groove to form an axial abutment of the association of the ring (5) on the hub (4), the interior member (1) being equipped with an encoder (12) having a track (12a) capable of generating a signal representative of its rotation, said encoder comprising a reinforcement (13) for rotatably securing to the interior member, said bearing being **characterised in that** the securing reinforcement (13) has a stop section (13b) that is interposed between the interior ring (5) and the exterior segment (11b) of the ring (11), said interior ring being in axial abutment on said exterior segment by means of said stop section.

2. Rolling bearing according to claim 1, **characterised in that** the stop section (13b) extends radially between a face of the ring (5) and the exterior segment (11b).

3. Rolling bearing according to one of claims 1 or 2, **characterised in that** the securing reinforcement (13) has an exterior section (13a) on which the encoding track (12a) is disposed.

4. Rolling bearing according to any one of claims 1 to 3, **characterised in that** the securing reinforcement (13) has a section (13c) for associating said reinforcement on the interior ring (5).

5. Rolling bearing according to claim 4, **characterised in that** the association section (13c) extends substantially axially inside the stop section (13b).

6. Rolling bearing according to one of claims 4 or 5, **characterised in that** the association section (13c) is attached to an interior wall (15) or the ring (5).

7. Rolling bearing according to claim 6, **characterised in that** the interior wall (15) is disposed opposite to the bearing surface (9) of the hub (4), the association section (13c) being immobilised radially between said wall and said bearing surface.

8. Rolling bearing according to claim 7, **characterised in that** the ring (5) has a recess (16) in which the interior wall (15) extends by forming a housing for the association section (13c).

9. Rolling bearing according to any one of claims 4 to 8, **characterised in that** the association section (13c) has a means (17) for axial holding of the reinforcement (13) on the ring (5).

10. Rolling bearing according to claim 9, **characterised in that** the association section (13c) has a radial fold (17) forming a means for axial holding of the reinforcement (13) on the ring (5).

11. Rolling bearing according to claim 10 when it is dependent on claim 6, **characterised in that** the radial fold (17) is disposed in axial abutment in a notch (18) in the interior wall (15) of the ring (5).

12. Rolling bearing according to any one of claims 1 to 11, **characterised in that** the ring (11) has a front face (11c) on which the stop section (13b) is in axial abutment, and a rear face (11d) in abutment on a complementary face (10a) of the groove (10).

13. Rolling bearing according to claim 12, **characterised in that** the rear face (11d) and/or the complementary face (10a) has a frustoconical profile that is arranged so that a radial clamping of the ring (11) in the groove (10) causes an axial force of pressing the front face (11c) on the stop section (13b).

14. Rolling bearing according to any one of claims 1 to 13, **characterised in that** the securing reinforcement (13) has at least one projection (19) that is disposed around the ring (11) in order to prevent a radial movement of said ring in the groove (10).

15. Rolling bearing according to claim 14, **characterised in that** the securing reinforcement (13) has a radial wall (14) on which the stop section (13b) is formed, the projection (19) being formed on said wall outside said stop section.
